# EUROPEAN PATENT APPLICATION

(11) **EP 1 729 146 A1**
(43) Date of publication of application: **06.12.2006**
(21) Application number: 05270019.2
(22) Date of filing: 01.06.2005
(51) Int. Cl.: G01S 3/14, H01Q 3/26, H01Q 3/24

(54) **Direction finder antenna receiver system**

(71) Applicant: BAE SYSTEMS (Defence Systems) Limited, Farnborough, Hampshire, GU14 6YU (GB)
(72) Inventor: The designation of the inventor has not yet been filed
(74) Representative: BAE SYSTEMS plc Group IP Department

(57) **Abstract**

Described herein is an antenna having an array of at least three monopole antenna elements for receiving a signal from a source of wavelength λ. Each antenna element has a length of λ/4. Groups of antennas are switchable between a receive mode and a transmit mode to obtain first and second signals from the source which are processed to derive a difference signal indicative of the bearing of the source from the antenna.

## Description

The present invention relates to antennas, and is more particularly, but not exclusively, concerned with a directional antenna suitable for mounting on a mobile platform.

It is known to incorporate directional antennas in craft, such as ships, or vehicles or aircraft. Direction-sensing antennas have several feed elements often making them complex and cumbersome to fit within such craft. Generally, each feed element comprises a plurality of individual antennas arranged to provide an indication of direction. In particular, certain types of steerable antennas, that usually required a mechanical steering platform, have been bulky and heavy, due to the amount of associated control equipment and alternative types need several radio frequency (RF) feedlines.

In addition to the amount of space which directional antennas have sometimes required, considerable amounts of wiring were needed to connect the antenna to control equipment, actuators, drives and servomotors. Therefore, a problem experienced with many existing directional antennas, and related steering systems, has meant that it was a complex and labour intensive task to remove and/or repair and/or replace those directional antennas, as well as ancillary drive and control equipment.

Generally, directional antenna systems need to be lightweight and compact so that they occupy as small a volume as possible.

It is therefore an object of the present invention to provide an improved antenna and directional antenna system which does not suffer from the disadvantages described above.

According to a first aspect of the present invention, there is provided an antenna for receiving a signal from a source, the signal having a wavelength A, the antenna comprising: an array, having at least three monopole antenna elements, for receiving the signal, each antenna element being approximately λ/4 in length; a switch connected to at least two of the antenna elements; control means for operating the switch to selectively switch each antenna element between a transmit mode and a receive mode; means for obtaining a difference signal between a first signal from the source received at a first group of antenna elements in a first switched interval, and a second signal from the source received at a second group of antenna elements in a second switched interval; and means for deriving a bearing indicative of the angle of the source from the antenna from the difference signal.

The source of the signal may be an object that transmits a response to incident energy. Transmitted response energy, in the form of incident signals, arrives at slightly different instants at different antenna elements. By deriving a difference signal from the incident signals, a bearing for the source of the signals can be determined.

In order to operate the antenna array, respective reflector and director antenna elements are shorted to ground, by way of the switch. The remaining antenna elements are switched to "open-circuit".

An advantage of the invention is that, because antenna elements in an array are switched sequentially, received signals are separated in the time domain. Thus only a single feed line is required from the antenna to remote analog-to-digital converting (ADC) equipment and/or other processing means. Consequently only a single, co-axial feed line is required, instead of several feedlines - one for each antenna in the array - as was previously the case. This greatly simplifies the amount of ancillary equipment that is needed by the antenna. Installation of the antenna, or retro fitting of the antenna is therefore relatively straightforward matter, being much quicker, simpler and cheaper to perform using the present invention than in existing multi-feed antennas, whilst still achieving the desired information.

Another advantage is that in the event of a failure of switches for the elements, the antenna is still capable of operating in a failsafe mode.

Yagi-Uda array antennas comprise: a fed element and directing and reflecting elements, the fed element is connected to a receiver for receiving incident signals and advantageously, both the directing and reflector elements are switched substantially simultaneously. The result of switching the directing and reflector elements is that the switches have a lower power handling requirement than would otherwise be the case with existing multi-feed antenna configurations. This aspect of the invention has advantages as feedlines and processing equipment also have a lower power-handling requirement and are therefore typically cheaper.

Preferably, the switching of antenna elements is achieved by using a switched network, such as a PIN diode network. Other switching networks or switching elements may be used whose characteristics are such that they are capable of handling large amounts of power, whilst also being able to be switched electronically and thereby quickly.

Preferably switching circuits is at a rate substantially above the Nyquist rate. Typical switching speeds of the PIN diode network are in excess of 10⁸ switching operations per second.

Spacing between adjacent antenna elements in the array is ideally close to λ/4. A reason for this is to reduce interference between adjacent antennas.

In a particularly preferred embodiment, an antenna array comprises five elements, four being arranged at the corners of a square and the fifth being located at, or substantially at, the intersect of lines drawn from opposite corners of the square. In an alternative arrangement, the square may be a rhombus, with suitable balancing or compensating networks employed, within the processing network, in order to compensate for any offset or resultant phase imbalance or delay.

In the preferred embodiment where antennas are located at corners of a square, a central element is fed and the assembly of five antennas forms what is often referred to as a pair of Yagi-Uda arrays (or simply Yagi arrays) of monopole antennas.

It will be appreciated that the length of an antenna element bears a direct relationship to the wavelength of the signal transmitted and/or received.

Preferably means is provided to perform subtraction of the two sets of signals and ideally this is performed digitally.

Storage means, such as electronic data store can be used to store temporarily values indicative of received signals in order that a difference determination may be made.

PIN diodes may be mounted in transmission lines at, or close to, the termination of a quarter wavelength (λ/4) long line so as to create a short circuit at the input when the PIN diode is biased off, and an open circuit at the input when the diode is biased on. If the length of the said transmission line is a half wavelength, then the diode is effectively reversed. The diode is biased on for a short circuit and off for an open circuit. Therefore, if two antenna elements are connected to quarter wavelength (λ/4) lines, and two antenna elements are connected to two half wavelength (λ/2) lines, then a single bias driving circuit for all PIN diodes is able to switch the groups of antenna elements to give switched directional patterns.

In an alternative embodiment, two or more driver circuits allow the elements to be controlled separately in order to generate a suitable set of transmit and/or receive patterns. In this second embodiment, a substrate, of the same order of magnitude as the antenna array, is required. However, the thickness of the substrate is ideally not more than 5mm, and preferably, less than 4mm. Ideally, it is less than 3mm in thickness. In a particularly preferred embodiment, direction finding may be achieved by the antenna array, whose characteristics are known. Consequently an electronic assessment of amplitude difference provides an immediate indication of the direction of an incident signal.

It will be appreciated that the invention can be retrofitted into an existing antenna system.

For a better understanding of the present invention, reference will now be made, by way of example only, to the accompanying drawings in which:
Figure 1 shows a diagrammatical representation of an antenna;
Figure 2 is a graph showing voltage standing wave ratio against frequency for the antenna of Figure 1;
Figure 3 is a polar plot showing a free-radiation pattern for a single antenna;
Figure 4 is a diagrammatical representation of one embodiment of an antenna in accordance with the present invention;
Figure 5 is a polar plot showing an azimuth radiation pattern for the antenna of Figure 4;
Figure 6 is a graph showing the difference of signals received against angle of arrival of signals;
Figure 7 is a diagrammatical representation of an alternative embodiment of an antenna in accordance with the present invention;
Figure 8 is a polar plot of the azimuth radiation pattern obtained using the antenna of Figure 7;
Figure 9 shows a graph of difference of signals against angle of arrival of signals for the polar plot of Figure 8;
Figure 10 is a diagrammatical representation of a further embodiment of an antenna in accordance with the present invention; and
Figures 11 and 12 are diagrammatical sketches of switched feedlines suitable for use with the antenna shown in Figure 4.

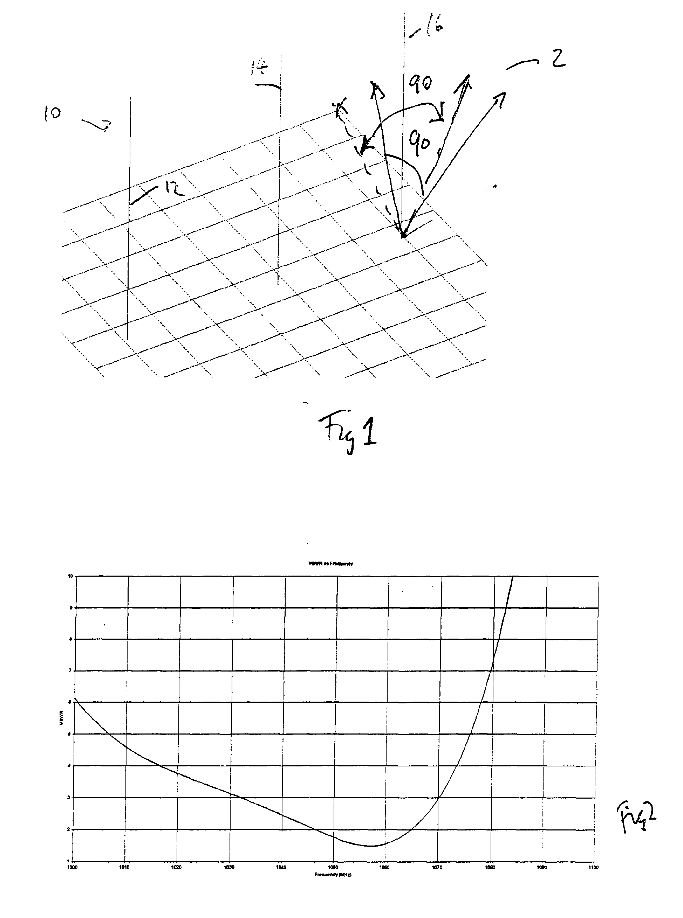

Referring initially to Figure 1, a configuration 10 of three antenna elements 12, 14 and 16 is shown. The useful bandwidth is relatively narrow due to the relatively narrow wire diameter of the antenna elements 12, 14 and 16. As shown in respect of antenna element 16, the active cone subtended by the antenna element has a half angle of 45°

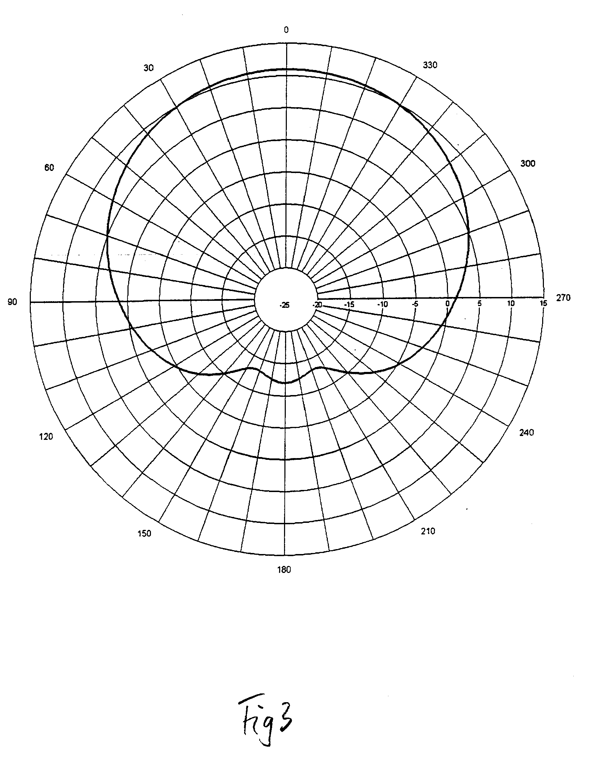

Figure 2 shows a graph of voltage standing wave ratio (VSWR) against the operational frequency of the antenna shown in Figure 1.

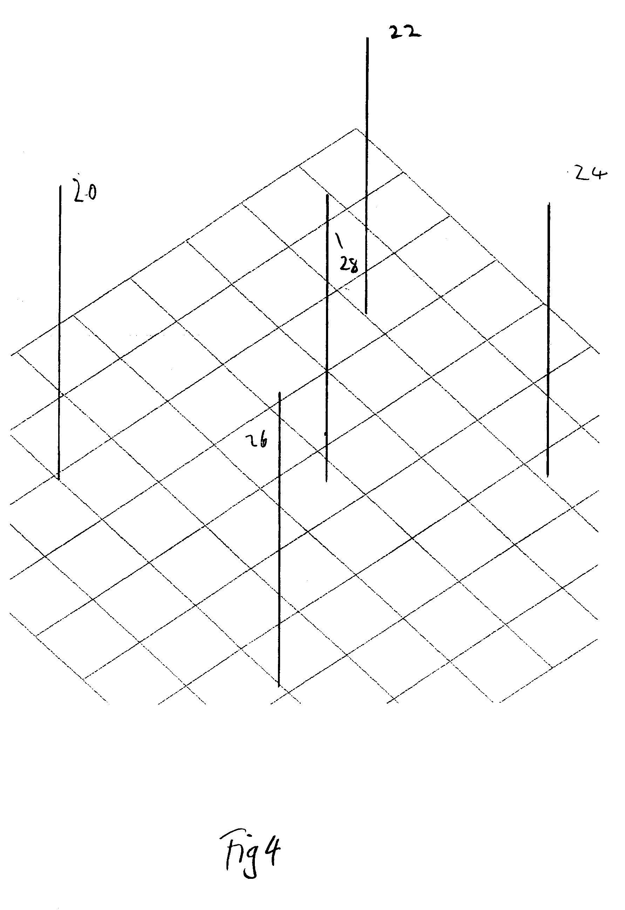

A free space radiation pattern, for the three element antenna configuration shown in Figure 1, is depicted in Figure 3.

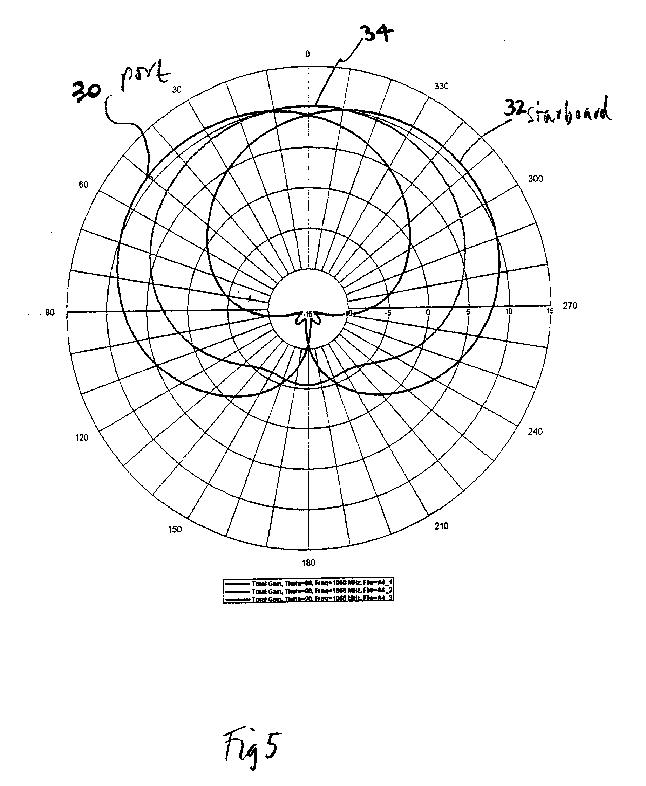

Although Figures 4 to 12 relate to the use of two groups of monopole antenna elements for implementing an antenna according to the invention, it will readily be understood that the underlying principle described below can be extended to a plurality of such groups of elements. This may be advantageously combined with the use of increasing numbers of antenna elements in each group.

One preferred embodiment of the present invention is shown in Figure 4. In Figure 4, an antenna comprising an array of five antenna elements 20, 22, 24, 26 and 28 is shown. Antenna elements 20, 22, 24 and 26 are arranged at the four corners of a square and antenna element 28 is arranged substantially in the centre of the square. The length of each antenna element 20, 22, 24, 26, 28 in the array is approximately λ/4 for the wavelength, λ, of radiation incident on the antenna elements.

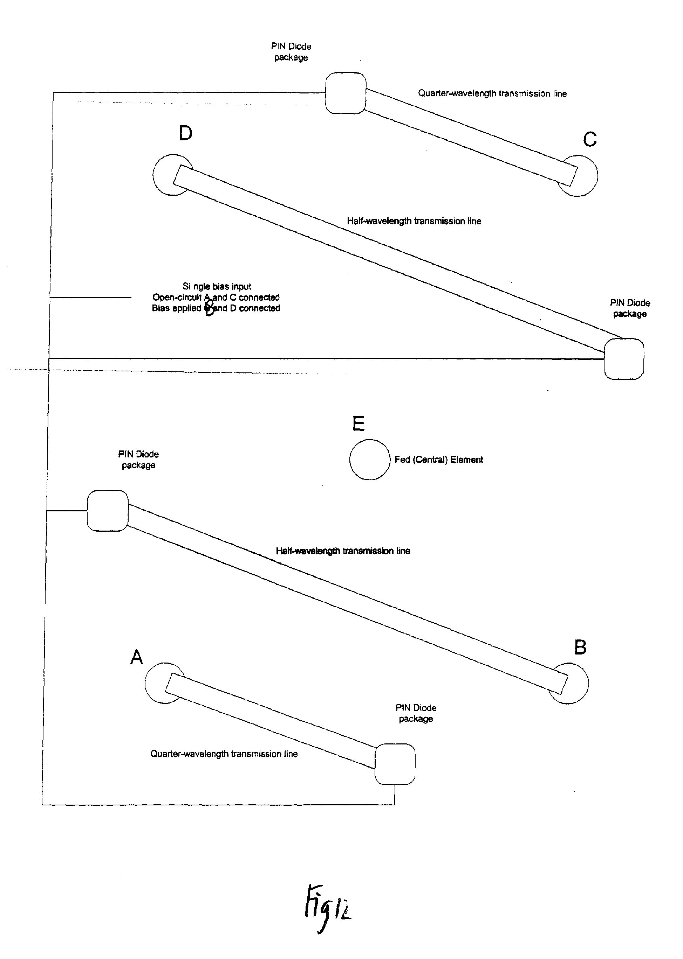

Figure 5 shows radiation patterns available from the array of Figure 4. A port radiation pattern 30 is formed by switching antennas 20 and 24 to open circuit whilst antennas 22 and 26 are shorted to ground. A starboard pattern 32 is obtained by switching antennas 22 and 26 to open circuit whilst shorting antennas 20 and 24 to ground. Switch circuits and related sequence is described below with reference to Figures 11 and 12. By combining both port and starboard patterns 30, 32, a so-called "ahead" pattern 34 is produced in which all parasitic elements of the antenna are shorted to ground. This is the so-called failsafe configuration and occurs, for example, in the event of a fault or failure of switching elements or the switching network itself.

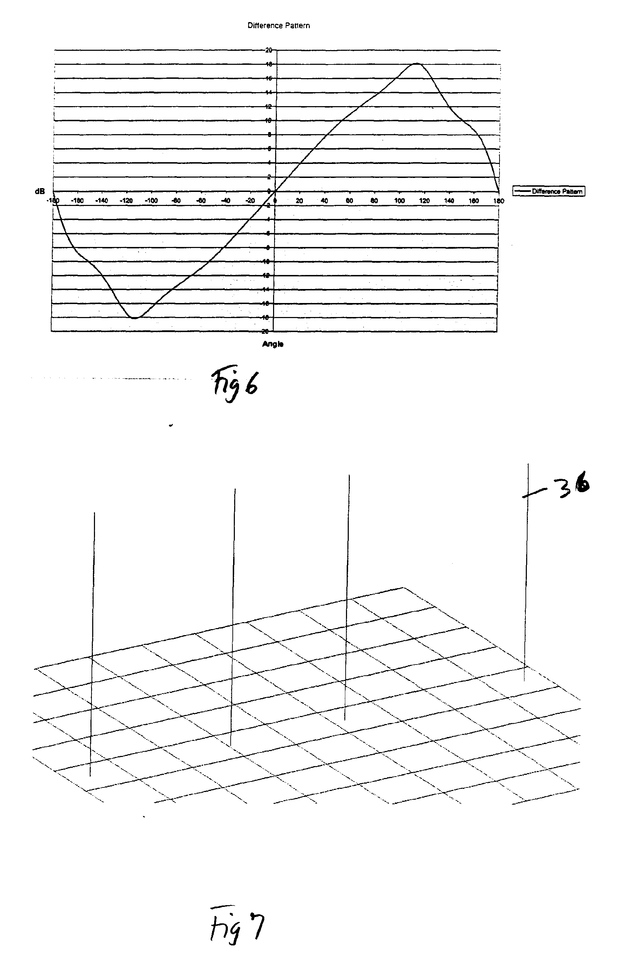

Figure 6 illustrates a graph of a signal difference against angle of arrival for the radiation patterns shown in Figure 5. The signal difference is obtained by subtracting one pair of signals from another to provide a difference signal which can be related to an angle of arrival function in respect of bearing either side of the "ahead" position. Thus it is apparent that a bearing signal can be derived by virtue of difference values of signals received at different groups of antennas.

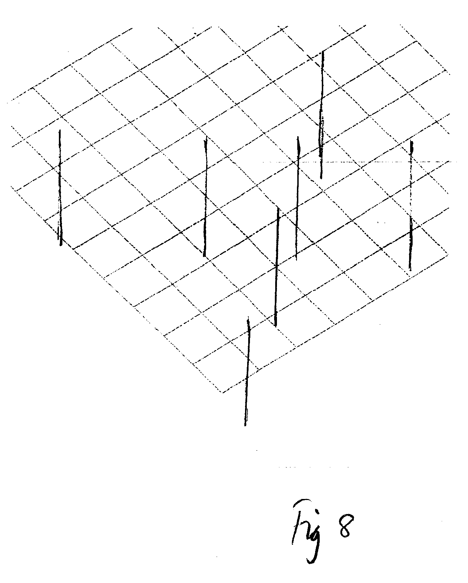

In another embodiment, as shown in Figure 7, a single antenna comprises a three-element Yagi array, with an additional fourth monopole element 36. The fourth monopole element 36 is at a distance from the other three by an amount in accordance with the known design of a Yagi-Uda array.

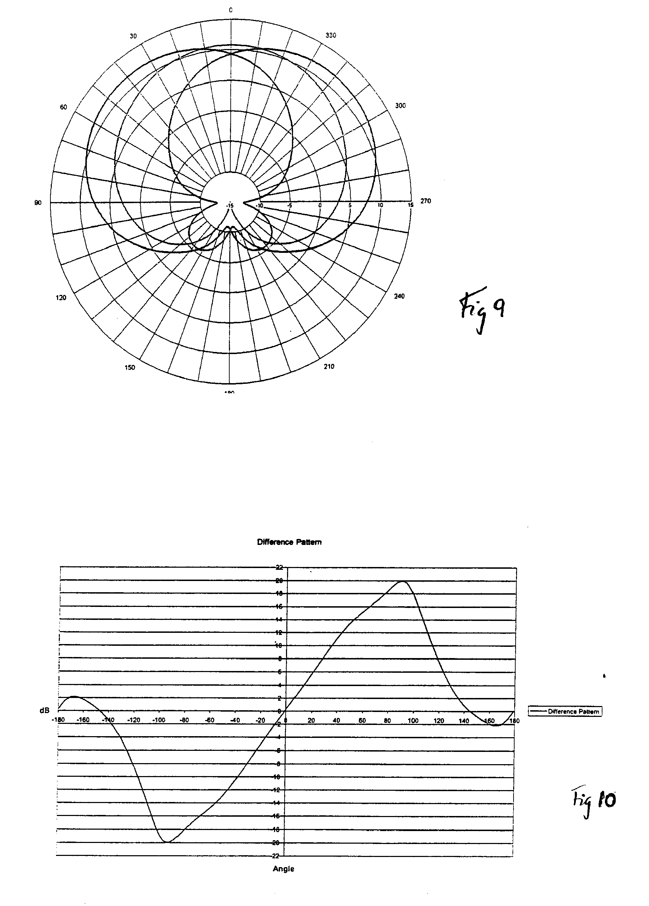

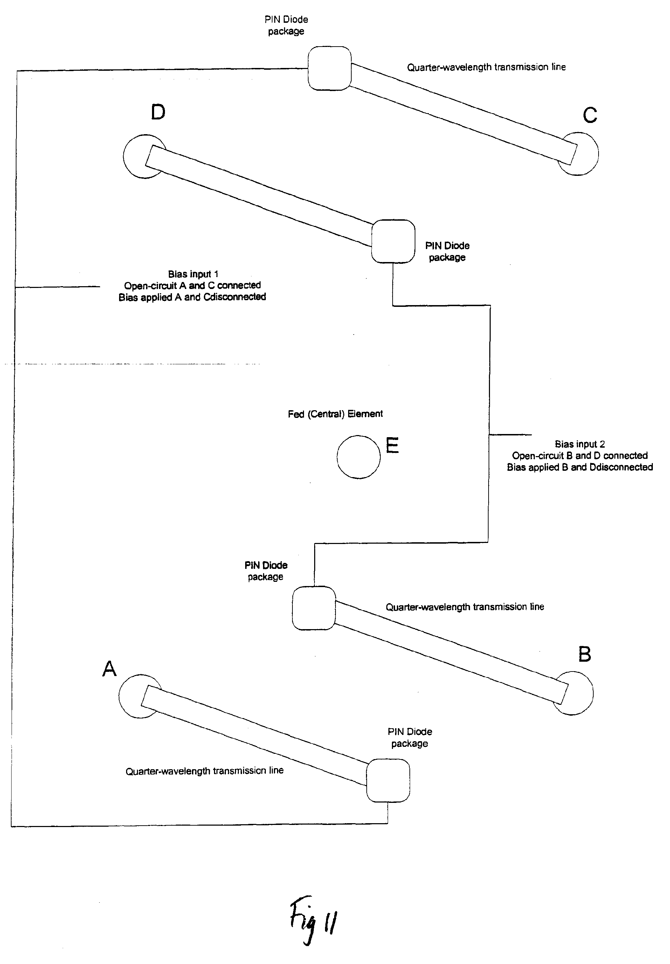

By combining two four-element arrays in a cross-over configuration, an antenna is achieved as shown diagrammatically in Figure 8. The results may be combined in a similar manner to that described above with reference to Figures 3, 4 and 5. A graph of signal difference against angle of arrival for the antenna of Figure 8 is shown in Figure 10. The signal difference is determined as described above. An advantage of the antenna shown in Figure 9 is that the beam is more focussed, and although only a minor improvement to signal-to noise ratio (SNR) is obtained, a higher slope for the difference pattern (Figure 10) is derived due to the offset of the port and starboard signal as shown in Figure 9.

An advantage of the present invention is that the antennas described above can readily be retro fitted to an existing installation as they occupy smaller volumes than previous antennas. The antenna is also quicker and simpler to fit, it requiring only a single co-axial feed.

A particular advantage of the invention is that in the fail safe mode, that is, where the PIN diodes of either left or right lobes fail, a combined lobe for the 'ahead' view still able to be obtained and thus a reasonable amount of information is still available.

For a frequency of operation of 1GHz, the inter-monopole spacing is typically 7cm with a monopole height of typically 7cm. It will be appreciated that the use of a folded element antenna reduces the size but also reduces the bandwidth of the antenna device. Alternatively the monopole may be loaded so that the effective length of the monopole is reduced.

A plurality of antenna elements may be arranged in a radial position about a central point so as to permit conical scanning. Conical scanning is a technique of phase detection using an amplitude modulated signal superimposed onto opposite antenna elements. By using pair selection, in conjunction with conical scanning, it is possible to obtain a direction of arrival estimate of a signal in three dimensions thus providing both azimuth and elevation bearing information.

Referring now to Figures 11 and 12, antenna elements A, B, C and D are connected to PIN diodes arranged at the extremes of transmission lines arranged in a convenient form such as microstrip or stripline (triplate). Elements A and C act as reflector and director elements to form one three-element Yagi-Uda array where element E acts as the fed element. Similarly, Elements B and D act as reflector and director elements to form a second three-element Yagi-Uda array where element E acts as a fed element.

In Figure 11, each antenna element A, B, C, D is shown connected at the extremes of λ/4 transmission lines. In Figure 12, antenna elements A and C are shown connected at the extremes of λ/4 transmission lines and antenna elements B and D are shown connected at the extremes of λ/2 transmission lines.

In Figure 11, two bias inputs are provided - bias input 1 being connected between the PIN diodes associated with antenna elements A and C with bias input 2 being connected between the PIN diodes associated with antenna elements B and D. With no bias applied, all the PIN diodes are turned-off, and an open circuit at the end of a quarter-wavelength transmission line is reflected as a short-circuit at the input to the line. This results in all four elements A, B, C and D being connected to form the "central" pattern.

Bias applied at bias input 1 turns on the PIN diodes associated with elements A and C. A short-circuit (diode conducting) placed at the end of a quarter-wavelength transmission line is reflected as an open-circuit at the input of the line. This results in the elements A and C being disconnected, leaving B and D to form the desired pattern along their axis. Similarly, bias signals applied at bias input 2, turns on the diodes associated with elements B and D. This results in the elements B and D being disconnected, leaving A and C to form the desired pattern along their axis.

In Figure 12, a single bias input is provided that is connected to each of the PIN diodes associated with antenna elements A, B, C and D. With no bias applied, all the PIN diodes are turned-off, and an open circuit is created at the input to the line. The placement of an open-circuit at the end of a half-wavelength long transmission line is reflected as being an open circuit at the input. This results in Elements B and D being disconnected, leaving antenna elements A and C connected to form the desired pattern along their axis.

Bias applied at the input turns on the PIN diodes associated with elements A and C. A short-circuit (diode conducting) placed at the end of a quarter-wavelength transmission line is reflected as an open-circuit at the input of the line. This results in the elements A and C being disconnected. A short-circuit on the end of a half-wavelength transmission line is reflected as a short-circuit at its input, resulting in Elements B and D forming the desired pattern along their axis.

Other variations may be made to the invention, for example by varying the thickness of the antenna element. It will be appreciated that by introducing particular forms of folded antenna, a more steerable antenna may be obtained. The antenna may be steerable between typically ±60°.

## Claims

1. An antenna for receiving a signal from a source, the signal having a wavelength λ, the antenna comprising:-
an array, having at least three monopole antenna elements, for receiving the signal, each antenna element being approximately λ/4 in length;
a switch connected to at least two of the antenna elements;
control means for operating the switch to selectively switch each antenna element between a transmit mode and a receive mode;
means for obtaining a difference signal between a first signal from the source received at first group of antenna elements in a first switched interval and a second signal from the source received at a second group of antenna elements in a second switched interval; and
means for deriving a bearing indicative of the angle of the source from the antenna from the difference signal.

2. An antenna according to claim 1, wherein the switch comprises at least one switching network for switching the antenna elements.

3. An antenna according to claim 2, wherein each switching network comprises a PIN diode network.

4. An antenna according to claim 3, wherein PIN diodes are mounted in transmission lines substantially at the termination of a transmission line.

5. An antenna according to claim 3 or 4, wherein the PIN diodes are biased off to ground and biased on to provide an open circuit.

6. An antenna according to any one of the preceding claims, wherein, in use, the antenna elements are switched by shorting to ground to configure the antenna elements as receiver elements and are switched to "open-circuit" to configure the antenna elements as director elements.

7. An antenna according to any one of the preceding claims, further including driver circuits for allowing elements to be controlled separately to generate, transmit and/or receive patterns.

8. An antenna according to any one of the preceding claims, further including a single feed line for connecting the antenna to remote equipment and/or other processing means.

9. An antenna according to any one of the preceding claims, wherein the array comprises five antenna elements, four elements being arranged at the corners of a square with the fifth element located substantially at the intersect of lines drawn from opposite corners of the square.

10. An antenna according to any one of the preceding claims, wherein the antenna elements are arranged in the form of a rhombus, the antenna including balancing or compensating networks for providing compensation for any offset or resultant phase imbalance or delay.
